# EUROPÄISCHE PATENTSCHRIFT

(11) **EP 2 431 116 B1**
(45) Veröffentlichungstag und Bekanntmachung des Hinweises auf die Patenterteilung: **01.01.2014**
(21) Anmeldenummer: 11007149.5
(22) Anmeldetag: 02.09.2011
(51) Int. Cl.: B23D 51/01, B27B 21/04

(54) **Handsäge**
Hand saw
Scie manuelle

(30) Priorität: 15.09.2010 DE 102010045387
(43) Veröffentlichungstag der Anmeldung: 21.03.2012
(73) Patentinhaber: Irwin Industrial Tool Company, Huntersville, NC 28078 (US)
(72) Erfinder: Geier, Manfred, 82178 Puchheim (DE); Field, Robert, Bakewell DE45 1AA Derbyshire (GB)
(74) Vertreter: Schmid, Nils T.F.

(56) Entgegenhaltungen:
- EP-A2- 2 020 281
- WO-A1-2004/105987
- WO-A1-2007/025654
- US-A1- 2009 000 132

## Beschreibung

Die Erfindung betrifft eine Handsäge, die einen Griff mit einem von einer Bedienperson zu betätigenden Greifabschnitt oder Greifholm, mit welchem dem Griff eine Betätigungskraft durch eine Bedienperson mitgeteilt wird, und ein an dem Griff befestigtes Sägeblatt mit einer Zahnreihe umfasst, die üblicherweise die Längsrichtung der Handsäge bestimmt. Die Betätigungskraft kann entweder eine Zug- oder Schubkraft mit einer nicht unwesentlichen Richtungskomponente in Längsrichtung der Handsäge sein. Die Zahnreihe umfasst wenigstens einen geradlinigen, insbesondere dem Griff benachbarten Reihenabschnitt. Dieser Reihenabschnitt soll eine geometrische Referenzgerade in Längsrichtung der Handsäge definieren.

Eine Handsäge gemäß dem Oberbegriff des Anspruchs 1 ist aus EP 2 020 281 A bekannt.

Insbesondere bei ringförmig umlaufenden Griffen mit einer Durchgreiföffnung ist der Griff bei einer Betrachtung in horizontaler Ausrichtung der Handsäge durch eine Unterkante begrenzt.

Eine derartige Handsäge ist aus WO 2007/025654 bekannt, bei der sich die Sägezahnreihe vollständig geradlinig über die Gesamtlänge des Sägeblatts erstreckt. Bei der bekannten Handsäge ist der Greifabschnitt gegenüber der Referenzgerade derart geneigt, dass eine Krafteintragsrichtung, in der die mitgeteilte Betätigungskraft bei einer Vorschubbewegung der Handsäge mit dem Greifabschnitt in das Sägeblatt eingeleitet wird, die Referenzgerade in einem Krafteintragswinkel größer als 30° schneiden soll. Es zeigte sich, dass der Neigungswinkel eine wichtige geometrische Komponente darstellt, mit der die Ergonomie bei Betätigung der Handsäge optimiert werden kann, wobei ein effektives Sägen ermöglicht ist.

Eine weitere bewährte Handsäge ist aus DE 10 2007 035 626 B3 bekannt, bei der der Handgriff gegenüber dem Sägeblatt derart weit nach unten verschoben ist, dass die Unterkante in einem Abstand zum Sägeblatt angeordnet ist. Die Unterkante der Handsäge hat einen geradlinigen Übergangsabschnitt, der sich in einem Winkel von über 20° bezüglich der Sägezahnreihe von letzterer weg nach unten erstreckt. An dem geneigten Unterkantenabschnitt schließt ein horizontaler Randabschnitt an, der sich über den größten Teil der Längsausdehnung des Griffs erstreckt.

Es ist Aufgabe der Erfindung, die Nachteile des Stands der Technik zu überwinden, insbesondere eine Handsäge bereitzustellen, die bei der Sägebetätigung, insbesondere beim Ansägen, ergonomisch verbessert ist.

Weitere Handsägen sind aus US 2009/0000132 A1 und WO 2004/105987 A1 bekannt.

Diese Aufgabe wird durch die Merkmale von Anspruch 1 gelöst. Danach hat die Unterkante einen sich von einem Übergang zwischen dem Griff und dem Sägeblatt geradlinig erstreckenden, flachen Auflagerandabschnitt, der parallel oder in einem Neigungswinkel von weniger als 15°, insbesondere 10° oder 5°, zu einer gedachten, die Spitzen der Zahnreihe verbindenden Referenzgerade verläuft.

Es zeigte sich mit der erfindungsgemäßen Maßnahme, den Übergang unterkantenseitig als horizontalen Auflagerandabschnitt parallel oder mit einer geringfügigen Neigung zur Handsäge zu gestalten, ein überraschend gutes Ansägeverhalten für die Handsäge. Die Bedienperson kann zum Ansägen den Griff auf das zu bearbeitende Werkstück an dem flachen ebenen Auflagerandabschnitt legen und somit eine Horizontalbewegung in unmittelbarer Nähe zum Werkstück, allerdings ohne vorzeitigen Eingriff der Sägezahnreihe bewerkstelligen. Bei einer Rückziehbewegung, bei der der Griff in Längsrichtung der Handsäge vorläuft, bleibt die Sägezahnreihe so lange aus dem Eingriff mit dem Werkstück, bis der ebene flache Auflagenrandabschnitt einen Rand des zu bearbeitenden flachen Werkstücks erreicht. Unmittelbar, nachdem der Auflagerandabschnitt das Werkstück verlässt, kommt im Wesentlichen schwunglos und ohne Veränderung der horizontalen Ausrichtung der Handsäge die Sägezahnreihe der Handsäge in Eingriff mit dem Werkstück. Auf diese Weise kann eine präzise gerade ausgerichtete Längsschnittfuge in das Werkstück eingebracht werden.

Als besonderer Vorteil erwies sich die parallele Ausrichtung des Auflagerandabschnitts relativ zur Sägezahnreihe ohne Ausrichtungsänderung der Handsäge bezüglich der horizontalen Ausrichtung und ohne größeren Sprung bei dem Übergang zwischen dem Griff und dem Sägeblatt während eines Durchsägevorgangs, bei dem das Durchsägen auch dann noch gewährleistet ist, wenn das Werkstück auf einer Tischablage positioniert ist und die Sägezahnreihe zum Sägen nur noch geringfügig höher als die Tischablage ist. Der parallel ablaufende Auflagerandabschnitt gewährleistet ein geführtes Sägen selbst am Ende des Durchsägevorgangs.

Weitere Eigenschaften, Vorteile und Merkmale der Erfindung werden durch die Gegenstände der Unteransprüche definiert.

Bei einer bevorzugten Ausführung der Erfindung erstreckt sich eine ebene flache Auflagefläche des Auflagerandabschnitts geradlinig bei einer Vertikalprojektion bis unterhalb des Griffabschnitts. Insbesondere ist die ebene Auflagefläche unterbrechungsfrei und ohne Kanten oder Ausnehmungen. Vorzugsweise erstreckt sich die Auflagefläche bis unterhalb eines Krafteintragsmittelpunkts des Greifabschnitts oder darüber hinaus, insbesondere bis zu dem auf die Unterkante des Griffs vertikal projizierten Krafteintragsmittelpunkt oder darüber hinaus. Eine vertikale Projektionsachse steht dabei senkrecht zu einer durch die Längserstreckung der Spitzen der Zahnreihe definierten horizontalen Referenzgerade.

Bei einer bevorzugten Weiterbildung erstreckt sich die ebene flache Auflagefläche des Auflagerandabschnitts unterbrechungsfrei in Längsrichtung über die Hälfte, etwa über 60 Prozent, oder über zwei Drittel der gesamten Längsausdehnung oder über die gesamte Längsausdehnung des Griffs in Längsrichtung.

Bei einer bevorzugten Ausführungsform beträgt die Längsausdehnung der ebenen flachen Auflagefläche des Auflagerandabschnitts mindestens zwei, vorzugsweise mindestens vier oder fünf Zentimeter in Längsrichtung der Handsäge.

Bei einer bevorzugten Weiterbildung der Handsäge weitet sich die ebene flache Auflagefläche des Auflagerandabschnitts in Längsrichtung ausgehend von dem Übergang zwischen Sägeblatt und Griff insbesondere allmählich kontinuierlich auf. Vorzugsweise nimmt eine zur Längsrichtung senkrechte Querersteckung der Auflagefläche insbesondere allmählich kontinuierlich zu. Vorzugsweise ist die maximale Querausdehnung der Auflagefläche größer oder gleich 10 mm.

Die in Querrichtung aufgeweitete Auflagefläche des Auflagerandabschnitts stabilisiert die Vertikallage der Säge insbesondere, wenn das Werkstück auf eine Arbeitsfläche, wie einen Tisch, aufgelegt wird. Da ein Kippen des Sägeblatts zur Seite durch die Auflage weitgehend verhindert wird, ergeben sich beim Sägen ebene Schnittflächen genau senkrecht zur Auflagefläche.

Bei einer bevorzugten Weiterbildung weist der Auflagerandabschnitt eine ebene Auflagefläche auf, die bei einer horizontalen Ausrichtung der Handsäge, vorzugsweise bei einer horizontalen Ausrichtung der Sägezahnreihe, insbesondere der Referenzgerade, vollständig in einer horizontalen Ebene liegt.

Bei einer bevorzugten Weiterbildung schließt sich an einem sägeblattfernen Ende des Sägerandabschnitts ein Angleitabschnitt an, der sich von dem Auflagerandabschnitt in einem Winkel kleiner als 45° in Vertikalrichtung nach oben weg erstreckt. Vorzugsweise weist der Angleitabschnitt eine ebene und flache Anlauffläche auf. Vorzugsweise ist ein Übergang zwischen dem Auflagerandabschnitt und dem Angleitabschnitt im Wesentlichen kantenfrei gerundet, so dass insbesondere beim Anlegen des Angleitabschnitts an ein zu bearbeitendes Werkstück die Handsäge beim Vorschub hin zum Sägeblatt sprungfrei gleitend längs des gesamten Auflagerandabschnitts ablaufen kann. Mit dieser bevorzugten Grifflconfiguration können beispielsweise auf einer Werkbank aufgelegte Leisten oder Balken präziser angesägt werden, indem der Angleitabschnitt auf der Werkbank gleitend geführt wird, bis das Sägeblatt eine Sägefuge im Werkstück ausgebildet hat.

Bei einer bevorzugten Weiterbildung ist am Übergang zur Zahnreihe der Auflagerandabschnitt gerundet, so dass insbesondere ein zu bearbeitendes Werkstück sprungfrei von dem Auflagerandabschnitt in die Zahnreihe gleitet.

Bei einer bevorzugten Weiterbildung der Handsäge ist ein Abstand des Auflagerandabschnitts und der Referenzgerade im Übergangsbereich von dem Auflagerandabschnitt zu dem Sägerand kleiner oder gleich einer maximalen Zahnhöhe der Zahnreihe und/oder zwischen 2 mm und 6 mm, vorzugsweise 4 mm +/- 1mm.

Bei einer bevorzugten Weiterbildung schneidet eine gedachte geradlinige Verlängerung des Auflagerandabschnitts die Referenzgerade im vom Griff entfernten vorderen Drittel des Sägeblatts, vorzugsweise in der vorderen Spitze des Sägeblatts. Der Schnittpunkt mit der Referenzgerade legt eine Auflagestelle der Säge fest. Zusammen mit dem Auflagerandabschnitt lässt sich damit die Position der Säge entlang der gesamten Länge der Säge stabil festlegen, bevor begonnen wird zu sägen, so dass ein präzises Ansägen, ohne dass die Säge verrutscht, ermöglicht ist.

Bei einer bevorzugten Weiterbildung schneidet eine gedachte geradlinige Verlängerung des Auflagerandabschnitts die Referenzgerade in einem Winkel von kleiner als 2°, 1°, 0,8° oder 0,5°; vorzugsweise zwischen 0,2° bis 0,6°, insbesondere etwa 0,4°.

Bei einer bevorzugten Weiterbildung schneidet die Referenzgerade eine gedachte geradlinige Verlängerung des Auflagerandabschnitts oder den Auflagerandabschnitt in einem Winkel von kleiner als 5°, 4°, oder 3°; vorzugsweise zwischen 1,8° bis 2,2°.

Bei einer bevorzugten Weiterbildung bildet der Griff eine Ringform, insbesondere D-Form, mit dem Greifabschnitt auf einer dem Sägeblatt abgewandten Seite des Griffs und einem dem Greifabschnitt gegenüberliegenden Halteabschnitt, an dem das Sägeblatt an dem Griff befestigt ist und einer in Vertikalrichtung unteren und oberen Verbindungsstrebe. Insbesondere ist die Verbindungsstrebe in Vertikalrichtung mit einer geringen Stärke ausgeführt, wobei der Auflagerandabschnitt eine Unterseite sowohl des Halteabschnitts der unteren Verbindungsstrebe als auch des Greifabschnitts bestimmt.

Bei der Handsäge des Anspruchs 1 ist der Greifabschnitt gegenüber der Referenzgerade derart geneigt ist, dass eine Krafteintragsrichtung, in der die mitgeteilte Betätigungskraft bei einer Vorschubbewegung der Handsäge von dem Greifabschnitt in das Sägeblatt eingeleitet wird, die Referenzgerade schneidet und ein Krafteintragswinkel zwischen einem Krafteintragsabstand von einem Greifabschnittmittelpunkt zu einem Referenzgeradenschnittpunkt in Krafteintragsrichtung größer als 30° und kleiner als 40° ist. Insbesondere ist der Krafteintragswinkel zwischen 32° und 38°, vorzugsweise etwa 34,5° +/- 1° und/oder 36,5° +/- 1°. Mit dem bevorzugten Krafteintragswinkel wird nicht nur eine hohe Sägeeffektivität erreicht. Auch das Ansägen wird aufgrund des großen Neigungswinkels deutlich verbessert, weil die Bedienperson die Handsäge deutlich sensibler führen kann.

Der Krafteintragsabstand wird längs einer Krafteintragslinie gemessen, die zu einer Mittellängsachse des Greifabschnitts senkrecht steht und sich von dem Krafteintragsmittelpunkt zur Referenzgerade hin erstreckt. Der Lotabstand erstreckt sich senkrecht von der Referenzgerade zu dem Krafteintragsmittelpunkt. Der Krafteintragsmittelpunkt liegt in einer Greifabschnittmittelpunktsregion, die durch einen Greifabschnittmittelpunktsregionskreis um einen geometrisch zu bestimmenden Greifabschnittmittelpunkt liegt. Der Greifabschnittmittelpunktsregionskreis hat einen Durchmesser von der halben minimalen Griffbreite bei einer Seitenansicht des Griffs. Zur Bestimmung des Greifabschnittmittelpunkts sind verschiedene Verfahren weiter unten beschrieben.

Es zeigte sich überraschenderweise, dass eine optimale Position von dem Greifabschnitt, der von der Bedienperson betätigt wird, zu dem Sägeblatt für die Mehrheit der Handsägen bedienenden Fachleute erreicht werden kann, wenn der oben genannte Krafteintragswinkel beachtet wird.

Es zeigte sich weiterhin, dass mit dem Krafteintragswinkel gemäß der bevorzugten Ausführung die von der Bedienperson aufgebrachte Sägekraft in einem deutlich verbesserten Verhältnis von Vertikalkraftkomponente zu Horizontalkraftkomponente dem Werkstück mitgeteilt wird. Insbesondere beim Bearbeiten von Weichholz, wie Fichte oder Kiefer, dringen die Zähne nicht zu tief in das Sägegut ein, was bei einer zu hohen Vertikalkraftkomponente der Fall wäre und den Vorschub erheblich hemmen würde. Dennoch gleitet die erfindungemäße Säge nicht oberflächlich über das Sägegut, wie dies bei einer zu niedrigen Horizontalkomponente der Fall wäre, sondern trennt effektiv das Werkstück.

Überdies lässt sich die Richtung bei der bevorzugten Ausführungsform der Handsäge leichter kontrollieren, da sich der Greifabschnitt ungewöhnlich weit in Längsrichtung der Säge neigt. Die Neigung des Greifabschnitts entspricht im Wesentlichen der Innenhandflächenneigung einer Bedienperson, wenn die Säge sachgemäß bedient wird, so dass die Hand beim Sägen eine natürliche Haltung einnimmt. Damit kann ein weitgehend ermüdungsfreies Sägen erreicht werden. Gegenüber bekannten Sägen zeigte sich auch überraschenderweise, dass die Stoßbelastung auf Hand, Ellenbogen und Schultergelenke einer Bedienperson bei der erfindungsgemäßen Säge deutlich reduziert ist, da ein bedeutender Teil der horizontalen Kraftkomponenten der Stoßkräfte längs des Daumenballens abgefedert ist.

Der Greifabschnittmittelpunkt kann bestimmt werden, indem in einem ersten Schritt bei einer seitlichen Betrachtung der Außenkontur des Griffs zwei Punktepaare auf den sich längs erstreckenden Außenkonturlinien des Greifabschnitts gefunden werden, die jeweils den geringsten Abstand zueinander haben. Durch jeweils zwei dieser Abstandspunkte werden dann längs der dem Sägeblatt zugewandten Außenkonturseite bzw. der dem Sägeblatt abgewandten Außenkonturseite Verbindungsgeraden erstellt. Jede der Verbindungsgeraden schneidet einmal den unteren und einmal den oberen Griffrand und/oder Greifabschnittsrand. Durch die diametral gegenüberliegenden Schnittpunkte können Diagonalen gezogen werden, deren Schnittpunkt den Greifabschnittmittelpunkt bestimmt.

Alternativ können zur Greifabschnittmittelpunktsbestimmung bei einem Greifabschnitt insbesondere mit einer gekrümmten Silhouette zunächst als Hilfskonstruktion Kreise an die Krümmungen angepasst werden. Jeweils zwei Mittelpunkte von in Breitenrichtung des Greifabschnitts gegenüberliegenden Kreisen können durch im Wesentlichen entlang der Breite des Greifabschnitts verlaufende Linien verbunden sein. Die Linien kreuzen je zweimal die Greifabschnittkanten, so dass sich vier Schnittpunkte mit dem Umriss des Greifabschnitts ergeben. Mittenbestimmungspunkte werden dann auf der Verbindungsstrecke zwischen dem jeweiligen Schnittpunkt und dem ursprünglichen Kreis in einem Abstand, der dem Radius des kleinsten der Kreise entspricht, festgelegt. Die Mittenbestimmungspunkte können diagonal verbunden werden. Der Kreuzungspunkt der Diagonalen definiert den Greifabschnittmittelpunkt.

Eine Mittellängsachse des Greifabschnitts erstreckt sich durch die beiden Abstandsmitten des oberen und unteren Mittenbestimmungspunktepaars.

Bei einer alternativen Greifabschnittmittelpunktdefinition ist der Greifabschnittmittelpunkt die Mitte zwischen den Verbindungsgeraden des oberen und unteren Mittenbestimmungspunktepaares entlang der Mittellängsachse des Greifabschnitts.

Bei einer bevorzugten Ausführungsform ist der Krafteintragsabstand von dem Griffmittelpunkt zum Referenzgeradenschnittpunkt in Krafteintragsrichtung kleiner als 180 mm, 160 mm oder 140 mm und/oder größer als 80 mm.

Die Handsäge gemäß dieser bevorzugten Ausführungsform lässt sich unmittelbar kontrollieren und steuern, da die sägeführende Hand eine Position nahe der Sägelinie einnimmt.

Insbesondere ist der Krafteintragsabstand zwischen 100 mm und 120 mm, vorzugsweise 110 mm +/- 5 mm lang. Der kurze Krafteintragsabstand ermöglicht eine besonders kompakte Bauweise des Griffs. Dieser ist daher außerordentlich verformungsstabil, so dass sich nur geringe Kraftübertragungsverluste durch elastische Verformung des Griffs ergeben. Die Bedienperson kann damit die Antriebskräfte dem Sägeblatt sowohl in Horizontal- als auch in Vertikalrichtung nahe der Sägelinie unmittelbar mitteilen, so dass die Richtungs- und/oder Kraftänderungen in das Sägeblatt direkt eingeleitet werden, und das Sägeblatt mühelos in die gewünschte Richtung lenkbar ist.

Bei einer bevorzugten Weiterbildung beträgt das Verhältnis von einer entlang der Referenzgerade von der Spitze bis zum Griff gemessenen Gesamtlänge der Säge zu dem Krafteintragsabstand zwischen 4 und 7, vorzugsweise zwischen 5,4 und 6,4 und/oder zwischen 4,7 und 5,3. Insbesondere hat das Verhältnis eine Wert zwischen 5,8 und 6,0 und/oder zwischen 4,8 und 5,2. Vorzugsweise ist das Verhältnis 5,95 +/- 0,1 und/oder 5,05 +/-0,1.

Bei einer bevorzugten Ausführung ist der Referenzgeradenschnittpunkt im Bereich eines Übergangs zwischen dem Griff und dem Sägeblatt insbesondere vom Sägeblatt ausgehend im ersten Drittel oder Viertel einer Unterkante des Griffs. Vorzugsweise befindet sich der Referenzgeradenschnittpunkt in einem Abstand von etwa einem Zehntel der Gesamtunterkantenlänge des Griffs vom Sägeblatt.

Bei einer bevorzugten Ausführung ist der Griff, insbesondere der Greifabschnitt, unverstellbar an dem Sägeblatt befestigt.

Weitere Eigenschaften, Vorteile und Merkmale der Erfindung werden durch die folgende Beschreibung einer bevorzugten Ausführung der Erfindung anhand der beiliegenden Zeichnung deutlich, in denen zeigen:
- Figur 1: eine Seitenansicht der erfindungsgemäßen Handsäge;
- Figur 2: eine Untenansicht der Handsäge nach Figur 1;
- Figur 3: eine Draufsicht der Handsäge nach Figur 1;
- Figur 4: eine Stirnansicht der Handsäge nach Figur 1;
- Figur 5: eine Rückansicht der Handsäge nach Figur 1;
- Figur 6: eine schematische Teilseitenansicht der Säge nach Figur 1, die eine Hilfskonstruktion einer ersten und zweiten Greifabschnittmittelpunktbestimmungsmethode darstellt;
- Figur 7: eine schematische Teilseitenansicht der Säge nach Figur 1, die eine erste Greifabschnittmittelpunktsbestimmungsmethode illustriert;
- Figur 8: eine schematische Teilseitenansicht der Säge nach Figur 1, die eine zweite Greifabschnittmittelpunktsbestimmungsmethode illustriert; und
- Figur 9: eine schematische Teilseitenansicht der Säge nach Figur 1, die eine dritte Greifabschnittmittelpunktsbestimmungsmethode darstellt.

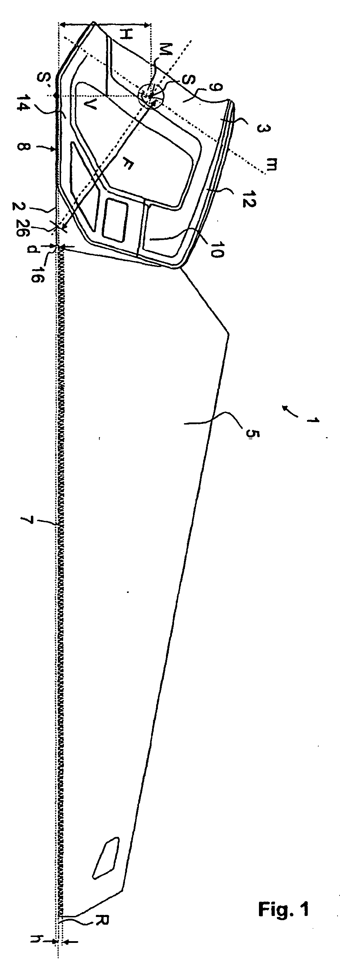

In Figur 1 ist eine erfindungsgemäße Handsäge im Allgemeinen mit der Bezugsziffer 1 versehen. Die Handsäge 1 umfasst einen Handgriff 3, der insbesondere aus einem Kunststoff gespritzt ist und ein an den Griff 3 angepasstes und mit diesem unverstellbar verbundenes Sägeblatt 5 mit einer Zahnreihe 7. Durch die Spitzen der einzelnen Zähne der Zahnreihe 7 wird eine Referenzgerade R festgelegt, die sich längs des Sägeblatts durch den Griff 3 in Horizontalrichtung hindurch erstreckt. Der Griff 3 weist einen Greifabschnitt 9 auf, der einem Befestigungsteil 10 gegenüberliegt, in dem das Sägeblatt 5 fixiert ist. Der Griff 3 ist aus zwei Kunststoffschalen zusammen gesetzt, die miteinander verschweißt sind, kann jedoch auch um das Sägeblatt gespritzt sein. Ein oberer Verbindungsholm 12 und ein unterer Verbindungsholm 14 verbinden den Befestigungsabschnitt 10 mit dem Greifabschnitt 9. Die Greifabschnittmittelachse m verläuft längs des Greifabschnitts 9.

Der Greifabschnitt 9 ist zum Sägeblatt hin und vom Sägeblatt weg ausgebaucht, so dass sich eine besonders ergonomische Greifsituation ergibt, da die bauchförmigen Wölbungen im Wesentlichen formkomplementär zum Innenvolumen einer greifenden Hand ausgebildet sind. Die ergonomische Greifabschnittsform stellt auch sicher, dass der Bediener den Greifabschnitt so umfasst, dass der Säge an einem optimalen Krafteintragsmittelpunkt des Greifabschnitts 9 eine Kraft durch die Bedienperson mitgeteilt werden kann.

Von dem Greifabschnittmittelpunkt S erstreckt sich eine Krafteintragslinie F in einem rechten Winkel zur Greifabschnittmittelachse m auf die Referenzgerade R zu und schneidet diese in einem dem Sägeblatt nahen Referenzgeradenschnittpunkt 26 des Griffs 3. Auch die obere Verbindungsstrebe 12 weist eine Neigung in Richtung der Referenzgerade auf, so dass sich ein gerichteter Kraftfluss zum Sägerand hin ergibt. Der Greifabschnittmittelpunkt S befindet sich in einem Lotabstand H über der Referenzgerade R. Der Lotabstand H zwischen der Referenzgerade R und dem Greifabschnittmittelpunkt S beträgt etwa zwischen 60 und 65 mm.

Ein Auflagerandabschnitt 8 des Griffs 3 erstreckt sich von der Sägezahnreihe weg zum Greifabschnitt 9 und bildet die Unterkante 2 des Griffs 3. Eine gedachte Verlängerung der Unterkante 2 verläuft in einem Abstand parallel zu der Referenzgerade R. Der Übergang zwischen der Zahnreihe 7 und dem Auflagerandabschnitt 8 ist durch eine Abrundung 16 des Auflagerandabschnitts gebildet, so dass nicht nur ein gleitender Übergang zum bequemen Sägen geschaffen wird, sondern auch eine Beschädigung des Werkstücks verhindert wird, wenn ein Handwerker die gesamte Sägeblattlänge bis zum Griff 3 ausnützt. Der Übergang überwindet eine Höhendifferenz zwischen Auflagerandabschnitt 8 und Referenzgerade R, womit von der dem wunschgemäßen Fluchten des Auflagerandabschnitts 8 mit der Referenzgerade R abgewichen wird. Allerdings kann dadurch im Bereich dieser Höhendifferenz entlang des Auflagerandabschnitts 8 eine zusätzlich Schweißnaht zur Verbindung der beiden Kunststoffgriffschalenteile vorgesehen sein. Es zeigte sich, dass eine derartige Schweißnaht die Griffteile auch bei extremen Biegebelastungen des Sägeblatts zuverlässig zusammenhalten kann.

Der Auflagerandabschnitt 8 erstreckt sich geradlinig und unterbrechungsfrei bis unter den Greifabschnitt 9 und bis über den auf die Unterkante 2 projizierten Greifabschnittsmittelpunkt S' hinaus. Der Greifabschnittsmittelpunkt S wird an einer zur Referenzgeraden R senkrecht stehenden Achse V auf den Auflagerandabschnitt 8 projiziert.

Die Unterkante 2 des Griffs 3 steht in Höhenrichtung leicht über die Zahnreihe 7 hervor. Der Abstand d von der Referenzgerade R zur Unterkante 2 ist allerdings geringer als die kleinste Zahnhöhe h eines Zahns der Zahnreihe 7, bei einem nicht verschlissenen Sägeblatt 5. Der Überstand d kann 1, 2 oder 4 mm betragen. Die Verlängerung der Auflagefläche 8 erstreckt sich in einem Abstand etwa 1, 2 oder 4 mm parallel zur Referenzgerade R.

Der Auflagerandabschnitt 8 bildet eine flache Auflagefläche, die sich entlang der gesamten Unterseite des Griffs erstreckt und sich jenseits des vertikal projizierten Krafteintragsmittelpunkts S' in einem Winkel von etwa 30° bezogen auf die Referenzgerade von dem Auflagerandabschnitt nach oben fortsetzt. Dieser angewinkelte Abschnitt der Auflagefläche kann als Angleitbereich 18 verwendet werden, um die Säge auf ein zu sägendes Bauteil hinzuführen.

Die flache Auflagefläche ist eben und glatt, um entlang einer Führungsfläche, die eine Werkbank oder ein langgestrecktes Werkstück, wie eine Platte oder ein Balkens in Längsrichtung, sein kann, ideal gleiten zu können. Beim Gleiten behält das Sägeblatt die senkrechte Orientierung zum Werkstück bei, so dass besonders glatte Schnittflächen gesägt werden können, da das Sägeblatt in Bezug auf die Schnittfläche nicht winkelig verkantet.

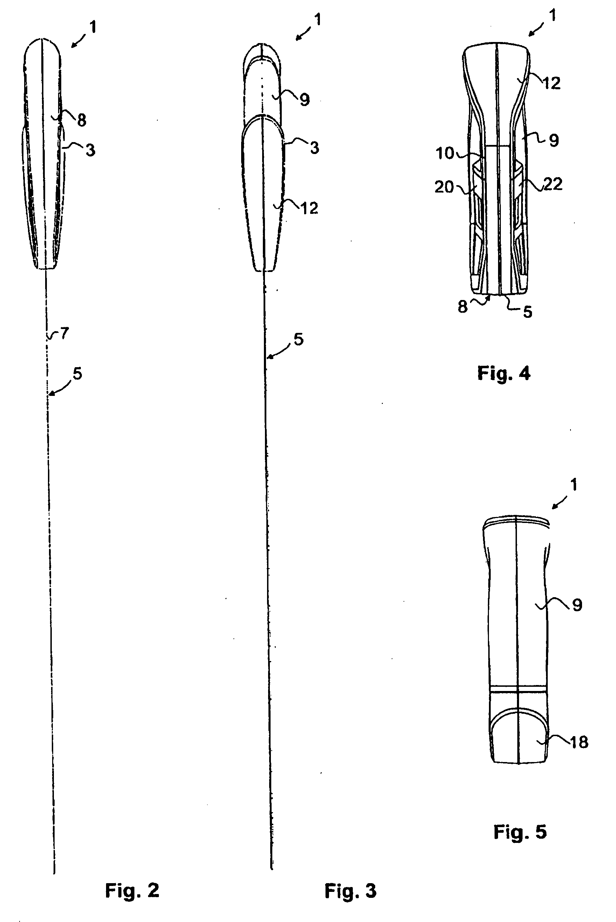

Wie in Figur 2 dargestellt ist, läuft die flache Auflagefläche des Auflagerandabschnitts 8 zum Sägerand 5 hin schmaler werdend zu, bzw. weitet sich in einer weg vom Sägeblatt 5 weisenden Richtung auf. Das Sägeblatt 5 ist in Querrichtung mittig in den Griff 3 eingesetzt. Der Griff 3 kann aus zwei symmetrisch aufgebauten Spitzgussteilen zusammengesetzt sein und das Sägeblatt zwischen den beiden Spritzgussteilen teilweise aufnehmen.

An dem Abschnitt des flachen Auflagerands 8, der dem Sägeblatt 5 zugewandt ist, ist die Querabmessung in etwa halb so groß wie an dem Ende des Auflagerandabschnitts, das dem Sägeblatt abgewandt ist. Durch die breite Auflagefläche in dem Bereich, der die Unterkante des Greifabschnitts 9 bildet, wird eine seitliche Kipptendenz der Säge reduziert.

Wie Figur 3 zeigt, nimmt die Querausdehnungen der oberen Verbindungsstrebe 12 ab und ist der Befestigungsabschnitt 10 zum Sägeblatt hin im Vergleich zu dem dem Greifabschnitt 9 zugewandten Teil des Griffs 3 verjüngt. Der Greifabschnitt 9 hat einen im Wesentlichen runden Querschnitt und ist am oberen und unteren Ende aufgeweitet, um ein Abrutschen der Hand zu verhindern.

In Figur 4 ist dargestellt, dass der dem Sägeblatt 5 zugewandte Befestigungsbereich 10 des Griffes 3, in dem die Querabmessungen vermindert sind, Verstärkungsbereiche 20, 22 aufweist, die den Befestigungsabschnitt 10 versteifen und einen sicheren Halt des Sägeblatts in dem Befestigungsabschnitt 10 des Griffs 3 gewährleisten.

Wie in Figur 5 dargestellt ist, ist der Greifabschnitt 9 auch in Querrichtung leicht nach außen gewölbt, um die Greifabschnittsform der Innenform einer greifenden Hand anzupassen. Der Greifabschnitt wird durch die das nach oben gezogene Auflageflächenende abgeschlossen, das den Angleitabschnitt 18 bildet.

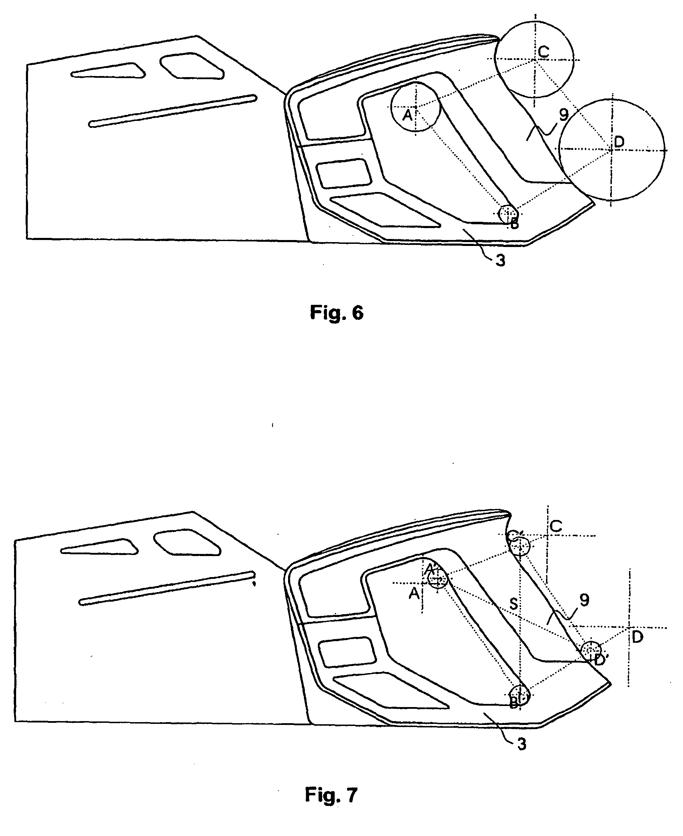

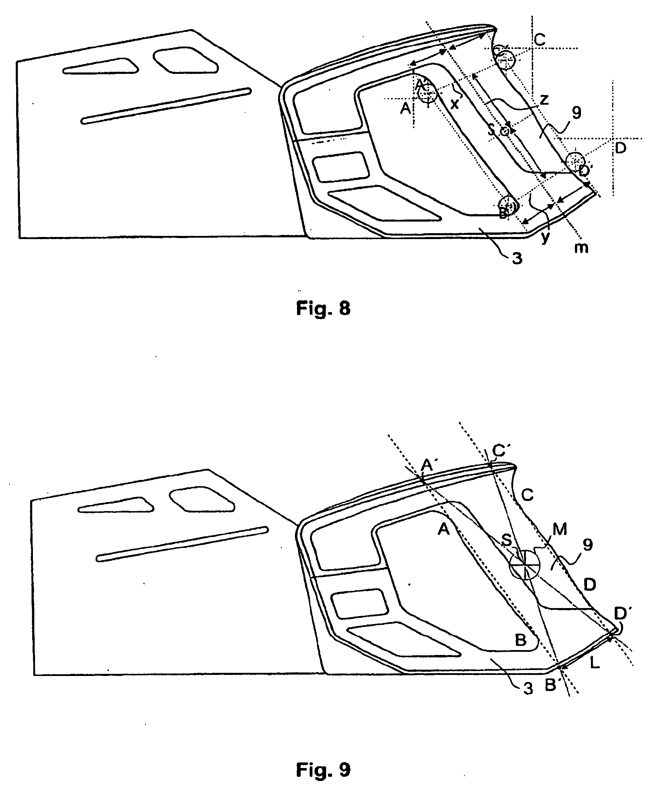

Als geometrischer Greifabschnittsmittelpunkt S kann, wie in den Figuren 6 und 9 dargestellt ist, der Schnittpunkt zweier den Greifabschnitt 9 kreuzender Diagonalen A'D' und B'C' festgelegt sein. Als Greifabschnittmittelpunkt S kann alternativ, wie in Figur 4 illustriert ist, als der Mittelpunkt zwischen den Verbindungslinien A'C', B'D' auf der mittleren Längsachse m des Greifabschnitts 9 bestimmt sein.

Die in Figur 6 dargestellte Konstruktion stellt eine Hilfskonstruktion zur Bestimmung der Mittenbestimmungspunkte A', B', C' und D' dar. An die konkaven Krümmungen des Greifabschnitts 9 werden Kreise mit den Krümmungen entsprechenden Radien angelegt. Die in Breitenrichtung des Greifabschnitts 9 gegenüberliegenden Mittelpunkte A', C' und B', D' der Kreise werden durch Linien verbunden. Ist der Greifabschnitt durch konvexe Krümmungen begrenzt, sollen die Mittenbestimmungspunkte A', B', C' und D' als Schnittpunkte zweier Tangenten an die konkave Krümmung gebildet sein, wobei die Tangenten mit an die konkave Krümmung anschließenden, im Wesentlichen geradlinigen Konturabschnitten fluchten sollen.

Wie in Figur 7 gezeigt ist, sind die Mittenbestimmungspunkte A', B', C' und D' entlang der Verbindungslinien AC und BD in einem Abstand, der dem kleinsten Kreisradius entsprechend den Hilfskreisen der Figur 2 entspricht, in vom Greifabschnitt 9 weg weisenden Richtungen angeordnet.

Bei einer ersten Greifabschnittmittelpunktbestimmungsmethode gemäß Figur 7 ist der Greifabschnittmittelpunkt S der Schnittpunkt von Diagonalen, die die diametral gegenüberliegenden Mittenbestimmungspunkte A' und D' bzw. B' und C' verbinden.

Die Mittengerade oder Mittellängsachse m des Greifabschnitts 9 ist dadurch bestimmt, dass jeweils die Abstandsmittelpunkte der Geraden A'C' und B'D' zu einer Längsmittelachse m verbunden werden.

Der Greifabschnittmittelpunkt S kann auch als Abstandsmitte der Kreuzungspunkte der Mittelachse m mit den Verbindungslinien B'D' bzw. A'C' entlang der Mittelachse m bestimmt sein, wie in Figur 8 gezeigt ist.

In Figur 9 ist eine weitere Bestimmungsmethode für den Greifabschnittmittelpunkt S dargestellt. Dazu müssen zunächst gegenüberliegende Punktepaare A, C und B, D geringster Breitenausdehnung des Greifabschnitts 9 gefunden werden. Die dem Sägeblatt zugewandten Punkte A und B werden zur Bildung einer Hilfsgeraden verbunden. Eine zweite Gerade verläuft durch die dem Sägeblatt abgewandten Punkte C und D. Die Hilfsgeraden AB bzw. CD erstrecken sich in Längsrichtung des Griffsteils 9 und durchkreuzen den Griff 3. Die Geraden kreuzen die Greifabschnittoberkante in den Schnittpunkten A', C' bzw. die Greifabschnittunterkante in den Schnittpunkten B', D'. Die diametral gegenüberliegenden Mittenbestimmungspunkte A' und D' bzw. B' und C' werden durch Diagonalen verbunden. Der Schnittpunkt der Diagonalen ist der Greifabschnittmittelpunkt S. Der Krafteintragsmittelpunkt kann in einer Greifabschnittmittelpunktsregion M liegen, die durch einen Kreis um den Greifabschnittmittelpunkt S definiert ist, der mit einer beliebigen Bestimmungsmethode festgelegt worden sein kann, wobei der Kreis einen Radius von der Hälfte der minimalen Breitenabmessung des Greifabschnitts 9 hat.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Handsäge
- 2: Unterkante
- 3: Handgriff
- 5: Sägeblatt
- 7: Zahnreihe
- 8: Auflagerandabschnitt
- 9: Greifabschnitt
- 10: Befestigungsabschnitt
- 12, 14: Verbindungsholme
- 16: Abrundung
- 18: Angleitabschnitt
- 20, 22: Verstärkungsbereiche
- 26: Referenzgeradenschnittpunkt

- d: Abstand
- h: Zahnhöhe
- m: Greifabschnittmittelachse
- A', B', C', D': Mittenbestimmungspunkte
- F: Krafteintragsabstand
- H: Lotabstand
- M: Greifabschnittmittelpunktsregion
- S: Greifabschnittmittelpunkt
- S': Projektion des Griffteilmittelpunkts
- R: Referenzgerade
- V: Projektionsachse

## Patentansprüche

1. Handsäge (1) umfassend einen Griff (3) mit einem von einer Bedienperson zu betätigenden Greifabschnitt (9) und ein daran befestigtes Sägeblatt (5), das eine Zahnreihe (7) aufweist, wobei der Griff (3) eine der Zahnreihe (7) benachbarte Unterkante (2) aufweist, **dadurch gekennzeichnet, dass** die Unterkante (2) einen sich von einem Übergang zwischen dem Griff (3) und dem Sägeblatt (5) geradlinig weg erstreckenden, flachen Auflagerandabschnitt (8) aufweist, der parallel oder in einem Neigungswinkel von weniger als 15°, insbesondere 10° oder 5°, zu einer gedachten, die Spitzen der Zahnreihe (7) verbindenden Referenzgerade (R) verläuft, und dass der Greifabschnitt (9) gegenüber der Referenzgerade derart geneigt ist, dass eine Krafteintragsrichtung, in der die mitgeteilte Betätigungskraft bei einer Vorschubbewegung der Handsäge von dem Greifabschnitt (9) in das Sägeblatt (5) eingeleitet wird, die Referenzgerade (R) in einem Krafteintragswinkel größer als 30° und kleiner als 40° schneidet.

2. Handsäge (1) nach Anspruch 1, **dadurch gekennzeichnet, dass** sich eine ebene flache Auflagefläche des Auflagerandabschnitts (8), insbesondere unterbrechungsfrei, bei einer Vertikalprojektion (V) bis unterhalb des Greifabschnitts (9), vorzugsweise bis zu einem Krafteintragsmittelpunkt (M) des Greifabschnitt (9) oder darüber hinaus, geradlinig erstreckt.

3. Handsäge (1) nach einem der vorstehenden Ansprüche, **dadurch gekennzeichnet, dass** sich eine ebene flache Auflagefläche des Auflagerandabschnitts (8), insbesondere unterbrechungsfrei, in Längsrichtung über die Hälfte, insbesondere über 60% oder über Zweidrittel, der gesamten Längsausdehnung oder über die gesamte Längsausdehnung des Griffs (3) in Längsrichtung erstreckt.

4. Handsäge (1) nach einem der vorstehenden Ansprüche, **dadurch gekennzeichnet, dass** die Längsausdehnung einer ebenen flache Auflagefläche des Auflagerandabschnitts (8) mindestens 2 cm, vorzugsweise mindestens 4 oder 5 cm, in Längsrichtung der Handsäge (1) beträgt.

5. Handsäge nach einem der vorstehenden Ansprüche, **dadurch gekennzeichnet, dass** sich eine ebene flache Auflagefläche des Auflagerandabschnitts (8) in Längsrichtung der Handsäge (1) ausgehend von dem Übergang (16) insbesondere allmählich, kontinuierlich aufweitet und/oder dass eine zur Längsrichtung senkrechte Quererstreckung der Auflagefläche insbesondere allmählich, kontinuierlich zunimmt und/oder eine maximale Querausdehnung von größer oder gleich 10 mm aufweist.

6. Handsäge nach einem der vorstehenden Ansprüche, **dadurch gekennzeichnet, dass** der Auflagerandabschnitt (8) eine ebene flache Auflagefläche aufweist, die bei einer horizontalen Ausrichtung der Handsäge, vorzugsweise bei einer horizontalen Ausrichtung der Sägezahnreihe, insbesondere der Referenzgerade (R), vollständig in einer horizontalen Ebene liegt.

7. Handsäge nach einem der vorstehenden Ansprüche, **dadurch gekennzeichnet, dass** an einem sägeblattfernen Ende des Auflagerandabschnitts (8) ein Angleitabschnitt (18) anschließt, der sich von dem Auflagerandabschnitt (8) in einem Winkel kleiner als 45° in Vertikalrichtung nach oben weg erstreckt und/oder eine ebene und flache Anlauffläche aufweist, wobei insbesondere eine Übergang zwischen dem Auflagerandabschnitt (8) und dem Angleitabschnitt (18) im Wesentlichen kantenfrei gerundet ist, so dass insbesondere beim Anlegen des Angleitabschnitts (18) an ein zu bearbeitendes Werkstück die Handsäge (1) beim Vorschub hin zum Sägeblatt (5) sprungfrei gleitend längs des gesamten Auflagerandabschnitts (8) ablaufen kann.

8. Handsäge nach einem der vorstehenden Ansprüche, **dadurch gekennzeichnet, dass** am Übergang (16) der Auflagerandabschnitt (8) gerundet ist, so dass insbesondere ein zu bearbeitendes Werkstück sprungfrei von dem Auflagerandabschnitt (8) in die Zahnreihe (7) gleitet.

9. Handsäge (1) nach einem der vorstehenden Ansprüche, **dadurch gekennzeichnet, dass** ein Abstand (d) des Auflagerandabschnitts (8) von der Referenzgerade (R) im Übergangsbereich von dem Auflagerandabschnitt zu dem Sägeblatt kleiner oder gleich einer maximalen Zahnhöhe der Zahnreihe und/oder zwischen 2 und 6 mm, insbesondere 4 mm +/- 1 mm ist und/oder dass eine gedachte geradlinige Verlängerung des Auflagerandabschnitts (8) die Referenzgerade (R) im vom Griff (3) entfernten vorderen Drittel des Sägeblatts, vorzugsweise an der vorderen Spitze des Sägeblatts schneidet, und/oder einer gedachten geradlinigen Verlängerung des Auflagerandabschnitts (8) die Referenzgeraden (R). in einem Winkel von kleiner als 2°, 1°, 0,8° oder 0,5, vorzugsweise zwischen 0,2 bis 0,6, insbesondere etwa 0,4° schneidet und/oder dass die Referenzgerade (R) eine gedachte geradlinige Verlängerung des Auflagerandabschnitts (8) oder den Auflagerandabschnitt (8) in einem Winkel von kleiner als 5°, 4° oder 3°, vorzugsweise zwischen 1,8° und 2,2° schneidet.

10. Handsäge (1) nach einem der vorstehenden Ansprüche, **dadurch gekennzeichnet, dass** der Griff (3) eine Ringform mit dem Greifabschnitt (9) auf einer dem Sägeblatt abgewandten Seite des Griffs und einem dem Greifabschnitt gegenüberliegenden Halteabschnitt (10), an dem das Sägeblatt (5) an dem Griff (3) befestigt ist, und einer in Vertikalrichtung unteren (14) und oberen (12) Verbindungsstrebe aufweist, die insbesondere mit einer in Vertikalrichtung geringeren Stärke ausgeführt ist, wobei der Auflagerandabschnitt (8) eine Unterseite sowohl des Halteabschnitts (10), der unteren Verbindungsstrebe (14) als auch des Greifabschnitts (9) begrenzt.

11. Handsäge (1) nach einem der vorstehenden Ansprüche, **dadurch gekennzeichnet, dass** der Greifabschnitt (9) derart relativ zu dem Sägeblatt (5) positioniert ist, dass der Krafteintragswinkel zwischen einem Krafteintragsabstand (F) von dem Greifabschnittmittelpunkt (S) zum Referenzgeradenschnittpunkt (26) in Krafteintragsrichtung und der Referenzgrade (R) zwischen 32° und 38°, vorzugsweise etwa 34,5° +/-1° und/oder 36,5° +/- 1° ist und/oder dass der Krafteintragsabstand (F) kleiner als 180 mm, 160 mm oder 140mm und/oder größer als 80 mm, insbesondere zwischen 100 mm und 120 mm, vorzugsweise etwa 110 +/- 5 mm ist und/oder dass der Referenzgeradenschnittpunkt (26) im Bereich eines Übergangs zwischen dem Griff (3) und dem Sägeblatt (5) liegt und/oder dass das Verhältnis von einer entlang der Referenzgerade von der Spitze bis zum Griff (3) gemessenen Gesamtlänge der Säge zu dem Krafteintragsabstand (F) zwischen 4 und 7, vorzugsweise zwischen 5,4 und 6,4 und/oder zwischen 4,7 und 5,3; insbesondere zwischen 5,8 und 6 und/oder zwischen 4,8 und 5,2, vorzugsweise etwa 5,95 +/- 0,1 und/oder 5,05 +/- 0,1 beträgt und/oder dass der Griff (3), insbesondere der Greifabschnitt (9), unverstellbar an dem Sägeblatt (5) befestigt ist.

## Claims

1. A hand saw (1) comprising a handle (3) with a gripping portion (9) to be operated by an operator and a saw blade (5) having a row of teeth (7) attached to it, wherein the handle (3) comprises a lower edge (2) adjacent to the row of teeth (7), **characterised in that** the lower edge (7) comprises a flat supporting rim portion (8) linearly extending away from a transition between the handle (3) and the saw blade (5), the supporting rim portion extending in parallel or at an angle of inclination of less than 15°, in particular 10° or 5°, to an imaginary reference straight (R) connecting the tips of the row of teeth (7), and **in that** the gripping portion (9) is inclined relative to the reference straight such that a force-introducing direction, in which the communicated operating force, for a feed movement of the hand saw, is introduced from the gripping portion (9) into the saw blade (5), crosses the reference straight (R) at a force-introducing angle of greater than 30° and less than 40°.

2. The hand saw (1) according to claim 1, **characterised in that** a plane flat supporting surface of the supporting rim portion (8), for a vertical projection (V) up to below the gripping portion (9), preferably extends linearly, in particular uninterruptedly, as far as a force-introducing centre point (M) of the gripping portion (9) or beyond it.

3. The hand saw (1) according to one of the preceding claims, **characterised in that** a plane flat supporting surface of the supporting rim portion (8) extends, in particular uninterruptedly, along half, in particular more 60% or more than two thirds of the entire longitudinal extension or along the entire longitudinal extension of the handle (3) in longitudinal direction.

4. The hand saw (1) according to one of the preceding claims, **characterised in that** the longitudinal extension of a plane flat supporting surface of the supporting rim portion (8) is at least 2cm, preferably at least 4cm or 5cm, in longitudinal direction of the hand saw (1).

5. The hand saw (1) according to one of the preceding claims, **characterised in that** a plane flat supporting surface of the supporting rim portion (8) widens continuously, in particular gradually, in longitudinal direction of the hand saw (1) starting from the transition (16) of the supporting surface, and/or **in that** a transverse extension of the supporting surface vertical to the longitudinal direction increases continuously, in particular gradually, and/or has a maximum transverse extension of more than or equal to 10cm.

6. The hand saw (1) according to one of the preceding claims, **characterised in that** the supporting rim portion (8) comprises a plane flat supporting surface which for a horizontal alignment of the hand saw, preferably for a horizontal alignment of the row of saw teeth, in particular of the reference straight (R), extends entirely in a horizontal plane.

7. The hand saw (1) according to one of the preceding claims, **characterised in that** at an end remote from the saw blade of the supporting rim portion (8) a gliding portion (18) adjoins which extends upwardly away from the supporting rim portion (8) at an angle of less than 45° in vertical direction and/or comprises a plane and flat approach surface, wherein in particular a transition between the supporting rim portion (8) and the gliding portion (18) is rounded off so as to be essentially edge-free, so that in particular when placing the gliding portion (18) against a work-piece to be worked, the hand saw (1), during the approach towards the saw blade, can move, gliding smoothly, along the entire supporting rim portion (8).

8. The hand saw (1) according to one of the preceding claims, **characterised in that** at the transition (16), the supporting rim portion (8) is rounded so that in particular a work-piece to be worked can glide smoothly from the supporting rim portion (8) into the row of teeth (7).

9. The hand saw (1) according to one of the preceding claims, **characterised in that** a distance (d) of the supporting rim portion (8), from the reference straight (R) in the transition area from the supporting rim portion to the saw blade, is smaller than or equal to a maximum tooth height of the row of teeth and/or between 2 and 6 mm, in particular +/- 1mm and/or **in that** an imaginary straight extension of the supporting rim portion (8) crosses the reference straight (R) in the front third of the saw blade remote from the handle (3), preferably at the front tip of the saw blade, and/or an imaginary straight extension of the supporting rim portion (8) crosses the reference straight (R) at an angle of smaller than 2°, 1°, 0.8° or 0.5°, preferably 0.2 to 0.6, in particular 0.4°, and/or in that the reference straight (R) crosses an imaginary straight extension of the supporting rim portion (8) or the supporting rim portion (8) at an angle of smaller than 5°, 4° or 3°, preferably between 1.8° and 2.2°.

10. The hand saw (1) according to one of the preceding claims, **characterised in that** the handle (3) comprises a ring shape with the gripping portion (9) on a side of the handle facing away from the saw blade and a holding portion (10) opposite the gripping portion where the saw blade (5) is attached to the handle (3), and a lower (14) and upper (12) (in vertical direction) connecting stay, which in particular is constructed with a lesser thickness in vertical direction, wherein the supporting rim portion (8) limits an underside both of the holding portion (10) of the lower connecting stay (14) and the gripping portion (9).

11. The hand saw (1) according to one of the preceding claims, **characterised in that** the gripping portion (9) is positioned relative to the saw blade (5) such that the force-introducing angle between a force-introducing distance (F) from the gripping portion centre point (S) to the reference straight centre point (26) in force-introducing direction, and the reference straight (R) is between 32° and 38°, preferably approx. 34.5° +/- 1° and/or 36.5° +/- 1°, and/or **in that** the force-introducing distance (F) is smaller than 180mm, 160mm or 140mm and/or larger than 80mm, in particular between 100mm and 120mm, preferably approx. 110 +/- 5mm, and/or **in that** the reference straight centre point (26) lies in the transition range between the handle (3) and the saw blade (5), and/or **in that** the ratio of a total length of the saw measured along the reference straight from the tip to the handle (3) versus the force-introducing distance (F) is between 4 and 7, preferably between 5.4 and 6.4 and/or between 4.7 and 5.3; in particular between 5.8 and 6 and/or between 4.8 and 5.2, preferably approx. 5.95 +/-0.1 and/or 5.05 +/- 0,1, and/or **in that** the handle (3), in particular the gripping portion (9), is non-adjustably attached to the saw blade (5).

## Revendications

1. Scie à main (1) comprenant une poignée (3) avec une section de prise (9) à actionner par un opérateur et une lame de scie (5) fixée dessus, laquelle présente une rangée de dents (7), la poignée (3) présentant une arête inférieure (2) voisine de la rangée de dents,
**caractérisée en ce que** l'arête inférieure (2) présente une section de bord d'appui (8) plate s'étendant en ligne droite à partir d'une transition entre la poignée (3) et la lame de scie (5), laquelle s'étend parallèlement ou bien selon un angle d'inclinaison de moins de 15°, en particulier de 10° ou de 5°, par rapport à une droite de référence (R) imaginaire reliant les pointes de la rangée de dents (7),
et **en ce que** la section de prise (9) est inclinée par rapport à la droite de référence de manière à ce qu'une direction d'introduction d'une force, dans laquelle la force d'actionnement communiquée est introduite à partir de la section de prise (9) dans la lame de scie (5) lors d'un mouvement d'avance de la scie à main, coupe la droite de référence (R) selon un angle d'introduction d'une force supérieur à 30° et inférieur à 40°.

2. Scie à main (1) selon la revendication 1, **caractérisée en ce qu'**une surface d'appui plate et plane de la section de bord d'appui (8) s'étend de manière rectiligne en particulier sans interruptions, avec une projection verticale (V) jusqu'en-dessous de la section de prise (9), de préférence jusqu'à un point central d'introduction d'une force (M) de la section de prise (9) ou bien au-delà de celui-ci.

3. Scie à main (1) selon l'une des revendications précédentes, **caractérisée en ce qu'**une surface d'appui plate et plane de la section de bord d'appui (8) s'étend, en particulier sans interruptions en direction longitudinale sur la moitié, en particulier sur 60% ou sur deux tiers de toute l'étendue longitudinale ou bien sur toute l'étendue longitudinale de la poignée (3), en direction longitudinale.

4. Scie à main (1) selon l'une des revendications précédentes, **caractérisée en ce que** l'étendue longitudinale d'une surface d'appui plate et plane de la section de bord d'appui (8) comporte au moins 2 cm, de préférence au moins 4 ou 5 cm, en direction longitudinale de la scie à main (1).

5. Scie à main selon l'une des revendications précédentes, **caractérisée en ce qu'**une surface d'appui plate et plane de la section de bord d'appui (8) s'élargie en direction longitudinale de la scie à main (1) en partant de la transition (16), en particulier de manière progressive, continue et/ou **en ce qu'**une étendue transversale perpendiculaire à la direction longitudinale de la surface d'appui augmente en particulier progressivement, en continu et/ou présente une extension transversale maximale supérieure ou égale à 10 mm.

6. Scie à main selon l'une des revendications précédentes, **caractérisée en ce que** la section de bord d'appui (8) présente une surface d'appui plate et plane laquelle, avec une orientation horizontale de la scie à main, de préférence avec une orientation horizontale de la rangée de dents de scie, en particulier de la droite de référence (R), se situe complètement dans un plan horizontal.

7. Scie à main selon l'une des revendications précédentes, **caractérisée en ce que**, à une extrémité éloignée par rapport à la lame de scie de la section de bord d'appui (8), une section de glissement (18) est en jonction, laquelle s'étend à partir de la section de bord d'appui (8) selon un angle inférieur à 45° en direction verticale en partant vers le haut et/ou présente une surface d'appui plate et plane, moyennant quoi en particulier une transition entre la section de bord d'appui (8) et la section de glissement (18) est sensiblement arrondie sans arêtes, de sorte qu'en particulier lors de la mise en place de la section de glissement (18) contre une pièce à usiner, la scie à main (1), lors de l'avance vers la lame de scie (5), peut évoluer sans sauter en glissant le long de toute la section de bord d'appui (8).

8. Scie à main selon l'une des revendications précédentes, **caractérisée en ce que** la section de bord d'appui (8) est arrondie à la transition (16) de manière à ce que, en particulier une pièce à usiner, glisse sans sauter de la section de bord d'appui (8) dans la rangée de dents (7).

9. Scie à main (1) selon l'une des revendications précédentes, **caractérisée en ce qu'**un espacement (d) de la section de bord d'appui (8) de la droite de référence (R) dans la zone de transition de la section de bord d'appui à la lame de scie est inférieur ou égal à une hauteur de dent maximale de la rangée de dents et/ou est compris entre 2 et 6 mm, en particulier entre 4 mm +/- 1 mm et/ou **en ce qu'**un prolongement rectiligne imaginaire de la section de bord d'appui (8) coupe la droite de référence (R) dans le tiers antérieur de la lame de scie éloigné de la poignée (3), de préférence au niveau de la pointe antérieure de la lame de scie, et/ou **en ce qu'**un prolongement rectiligne imaginaire de la section de bord d'appui (8) coupe la droite de référence (R) selon un angle inférieur à 2°, 1°, 0,8° ou 0,5, de préférence compris entre 0,2 à 0,6, en particulier d'environ 0,4° et/ou **en ce que** la droite de référence (R) coupe un prolongement rectiligne imaginaire de la section de bord d'appui (8) ou bien la section de bord d'appui (8) selon un angle inférieur à 5°, 4° ou 3°, de préférence compris entre 1,8° et 2,2°.

10. Scie à main selon l'une des revendications précédentes, **caractérisée en ce que** la poignée (3) présente une forme annulaire, avec la section de prise (9) sur un côté de la poignée tournant le dos à la lame de scie et une section de maintien (10) située en vis-à-vis de la section de prise, à laquelle la lame de scie (5) est fixée sur la poignée (3), et une entretoise de liaison inférieure (14) et supérieure (12) en direction verticale, laquelle est en particulier réalisée avec une épaisseur plus faible en direction verticale, moyennant quoi la section de bord d'appui (8) délimite un côté inférieur de la section de maintien (10), de l'entretoise de liaison inférieure (14) tout comme également de la section de prise (9).

11. Scie à main (1) selon l'une des revendications précédentes, **caractérisée en ce que** la section de prise (9) est positionnée par rapport à la lame de scie (5) de manière à ce que l'angle d'introduction d'une force entre un espacement d'introduction d'une force (F) du point central de section de prise (S) jusqu'au point d'intersection de droite de référence (26) en direction d'introduction d'une force et la droite de référence (R) est compris entre 32° et 38°, en étant de préférence environ de 34,5° +/- 1° et/ou de 36,5° +/-, et/ou **en ce que** l'espacement d'introduction d'une force (F) est inférieur à 180 mm, 160 mm ou 140 mm et/ou supérieur à 80 mm, en étant en particulier compris entre 100 mm et 120 mm, en étant de préférence environ de 110 +/- 5 mm et/ou **en ce que** le point d'intersection de droite de référence (26) se situe dans la zone d'une transition entre la poignée (3) et la lame de scie (5) et/ou **en ce que** le rapport entre une longueur totale de la scie mesurée le long de la droite de référence de la pointe jusqu'à la poignée (3) et l'espacement d'introduction d'une force (F) est compris entre 4 et 7, de préférence entre 5,4 et 6,4 et/ou entre 4,7 et 5,3 ; en particulier entre 5,8 et 6 et/ou entre 4,8 et 5,2, en étant de préférence environ de 5,95 +/- 0,1 et/ou de 5,05 +/- 0,1 et/ou **en ce que** la poignée (3), en particulier la section de prise (9), est fixée de manière non réglable sur la lame de scie (5).
